# EUROPEAN PATENT APPLICATION

(11) **EP 4 642 012 A1**
(43) Date of publication of application: **29.10.2025**
(21) Application number: 23907411.5
(22) Date of filing: 10.11.2023
(51) Int. Cl.: H04L 67/131, H04L 67/303

(54) **METHOD FOR PROVIDING XR AUTHORING TOOL THAT CAN SUPPORT DIFFERENT TYPES OF XR DEVICES AND SENSORS**

(30) Priority: 22.12.2022 KR 20220181610
(71) Applicant: Korea Electronics Technology Institute, Bundang-gu, Seongnam-si Gyeonggi-do 13509 (KR)
(72) Inventor: SON, Ye Seul, Seoul 03505 (KR); CHOI, Kwang Soon, Goyang-si, Gyeonggi-do 10417 (KR); YEOM, Ji Woon, Hwaseong-si, Gyeonggi-do 18478 (KR); YANG, Yoon Mo, Goyang-si, Gyeonggi-do 10592 (KR)
(74) Representative: Isarpatent
(86) International application number: PCT/KR2023/018048
(87) International publication number: WO 2024/136125

(57) **Abstract**

Provided is a method for providing an XR authoring tool that can support different types of XR devices and sensors. An XR authoring tool framework, according to an embodiment of the present invention, establishes a communication connection to an XR device, receives a device profile from the XR device, and links the XR device and the XR authoring tool on the basis of the device profile. Consequently, by standardizing the XR device/data profile and supporting linkage between the XR authoring tool framework and various XR devices, it becomes possible to provide an XR authoring tool that is not limited by an XR device or OS, thereby facilitating XR content development.

## Description

### Technical Field

The disclosure relates to an extended reality (XR) (virtual reality (VR)/augmented reality (AR)/mixed reality (MR)) authoring tool framework, and more particularly, to a method for supporting access of an XR authoring tool framework to data that is acquired from an XR device.

### Background Art

XR contents used in XR devices are created by using authoring tools, and currently released XR devices use authoring tools that are subordinate to device manufacturers or operating systems (OSs).

To create XR contents, an XR device may need to receive data from various types of sensors mounted therein to interact with an XR device wearer and its environment. However, even the same type of sensor may have different interfaces, data types, and data ranges depending on manufacturers or models, and methods for receiving and processing data are all different. Therefore, the XR device equipped with sensors has no choice but to use an authoring tool that is specific to each device due to characteristics of the XR device.

Platforms of XR devices most popularly used in the current market and XR content authoring tools on the corresponding platforms may be broadly classified into the following three types based on OSs (platforms):
1. Microsoft Window-based platform-MRTK
2. Google Android-based platform-ARCore
3. Apple iOS-based platform-ARKit

Even if each OS is used, the characteristics of sensors mounted in XR devices are all different as described above, so that a separate authentication procedure of an OS developer (verification of sensor data transmission and reception connection and internal algorithm linkage) is needed to use an authoring tool provided by the OS developer, and a huge amount of time and cost are required.

Therefore, in order to sell XR devices, it is also necessary to develop their own content authoring tools in addition to XR devices. In addition, another problem is that contents developed by an OS-dependent authoring tool are not usable on other platforms.

### Disclosure

### Technical Problem

The disclosure has been developed to solve the above-described problems, and an object of the disclosure is to provide a method for enabling linkage between an XR authoring tool framework and various XR devices by standardizing XR device/data profiles, as a solution to provide an XR authoring tool that is not subordinate to XR devices or OSs.

### Technical Solution

According to an embodiment of the disclosure to achieve the above-described object, an XR authoring tool providing method may include: a step of communicatively connecting, by an XR authoring tool framework, with an XR device; a step of receiving, by the XR authoring tool framework, a device profile from the XR device; and a step of linking, by the XR authoring tool framework, the XR device and an XR authoring tool, based on the received device profile.

The device profile may have a code of the XR device, information on components provided in the XR device recorded thereon.

The components may include a processor, a sensor, a module.

The step of receiving may include further receiving a data profile from the XR device, and the step of linking may include linking the XR device and the XR authoring tool, based on the device profile and the data profile.

The data profile may be specified in the unit of a component.

The data profile may have information on a component, a data name, a data format recorded thereon.

The step of linking may include converting data received from the XR device, based on the device profile, and transferring the data to the XR authoring tool.

The data may have information on the component of the XR device, the data name, a data value recorded thereon.

The step of connecting may include connecting, by the XR authoring tool framework, to the XR device directly, via a platform mounted in the XR device, or via an authoring tool supported in the XR device and a platform mounted in the XR device.

According to another aspect of the disclosure, there is provided an XR authoring tool framework including: a communication unit configured to communicatively connect with an XR device; a processor configured to receive a device profile from the XR device, and to link the XR device and an XR authoring tool, based on the received device profile; and a storage unit configured to provide a storage space needed for the processor.

According to still another aspect of the disclosure, there is provided an XR authoring tool providing method including: a step of communicatively connecting, by an XR authoring tool framework, with an XR device; a step of receiving, by the XR authoring tool framework, a data profile from the XR device; and a step of linking, by the XR authoring tool framework, the XR device and an XR authoring tool, based on the received data profile.

According to yet another aspect of the disclosure, there is provided an XR authoring tool framework including: a communication unit configured to communicatively connect with an XR device; a processor configured to receive a data profile from the XR device, and to link the XR device and an XR authoring tool, based on the received data profile; and a storage unit configured to provide a storage space needed for the processor.

### Advantageous Effects

As described above, according to embodiments of the disclosure, an XR authoring tool that is not subordinate to XR devices or OSs may be provided by standardizing XR device/data profiles and supporting linkage between the XR authoring tool framework and various XR devices, and based on this, XR content development may be facilitated.

### Description of Drawings

FIG. 1 is a view illustrating a specification of a hardware configuration.
FIG. 2 is a view illustrating a specification of a data configuration.
FIG. 3 is a view illustrating a specification of data.
FIG. 4 is a view illustrating an XR authoring tool framework.

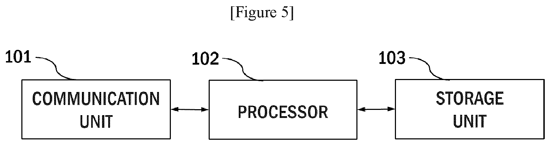

FIG. 5 is a view illustrating a configuration of an XR authoring tool framework server.

### Best Mode

Hereinafter, the disclosure will be described in more detail with reference to the drawings.

Embodiments of the disclosure present an XR authoring tool framework which is capable of supporting different types of XR devices and sensors. The disclosure relates to a technology that provides an XR authoring tool that is not subordinate to XR devices or OSs, by standardizing XR device/data profiles and enabling linkage between the XR authoring tool frame and various XR devices.

To achieve this, embodiments of the disclosure use a profile that standardizes hardware configurations and data formats of various XR devices to link all XR devices with XR authoring tools provided by an XR authoring tool framework without being subordinate to XR devices or platforms mounted thereon (OSs).

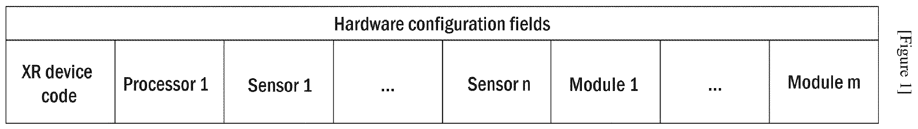

FIG. 1 illustrates a specification of a hardware configuration. This is a profile specification of an XR device and is formed of a format that is standardized to specify detailed specifications of hardware components of an XR device.

As shown in the drawing, a code of the XR device, information on components mounted in the XR device may be recorded on the hardware configuration specification. The hardware components mounted in the XR device may include a processor, a sensor, a module, etc., and other types of components may be added.

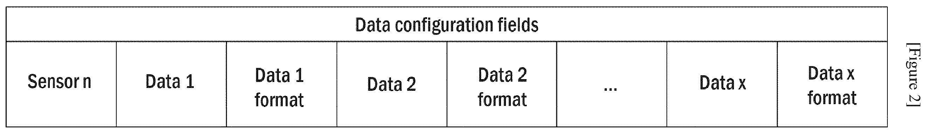

FIG. 2 illustrates a specification of a data configuration. This is a profile specification for data that is inputted to and outputted from an XR device, and is specified in the unit of a component. FIG. 2 illustrates a specification of a data configuration for data that is inputted to and outputted from a sensor n mounted in an XR device.

As shown in the drawing, information on a component identifier, a data name, a data format may be recorded on the data configuration specification. Names and formats may be specified for each piece of inputted and outputted data.

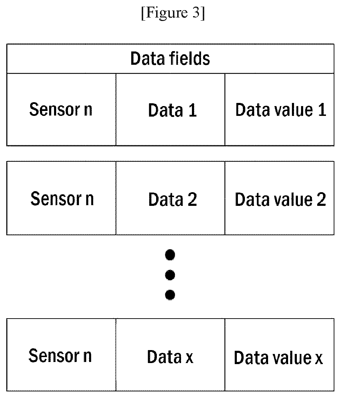

FIG. 3 illustrates a data specification. This contains actual values of data that is inputted to and outputted from an XR device. As shown in the drawing, information on components of an XR device, data names, data values may be recorded on the data specification.

Through the specifications presented in FIGS. 1 to 3, types and formats of all input and output data for components of various XR devices may be expressed in common, and based on the specifications, XR devices may be linked with authoring tools provided by the XR authoring tool framework regardless of types and formats of data.

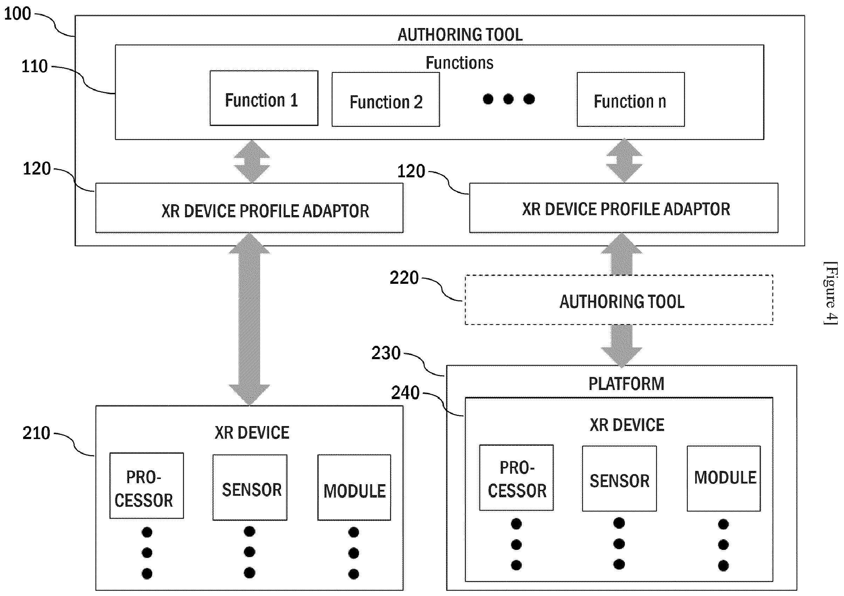

FIG. 4 illustrate an XR authoring tool framework to which the specifications presented in FIGS. 1 to 4 are applicable. The XR authoring tool framework 100 may provide an XR authoring tool 110 for developing XR contents. The XR authoring tool 110 may provide various XR authoring functions.

In addition, the XR authoring tool framework 100 may include an XR device profile adaptor 120 to be linked with different types of XR devices 210, 240. The XR device profile adaptor 120 may be a script file that creates detailed specifications by using profiles on connected XR devices, a SW module, or a processor driving the same.

The XR device profile adapter 120 may provide an interface for communicatively connecting to the XR devices 210, 240 to perform the following operations of:
1) for the XR device 210 that is not equipped with a platform, directly connecting and transmitting and receiving data needed to create XR contents; and
2) for the XR device 240 equipped with a platform 230 that supports an authoring tool 220, transmitting and receiving data needed to create XR contents through the authoring tool 220 and the platform 230.

Meanwhile, an XR device equipped with a platform that has no supportable authoring tool may be conceived. In this case, the XR device profile adaptor 120 may transmit and receive data needed to create XR content through the platform of the XR device.

The XR device profile adaptor 120 communicatively connected with the XR devices 210, 240 may receive hardware configuration specifications (device profiles) and data configuration specifications (data profiles) from the XR devices 210, 240.

The XR device profile adaptor 120 may link the XR devices 210, 240 and the XR authoring tool 110 with reference to the device profiles and the data profiles received.

Specifically, the XR device profile adaptor 120 may receive data from the components of the XR devices 210, 240, may convert the data into a format of the XR authoring tool 110, and then, may transfer the data to the XR authoring tool 110, and may convert data returned from the XR authoring tool 110 into data of the format that is used in the XR devices 210, 240, and may transfer the data to the XR devices 210, 240.

The XR authoring tool framework according to an embodiment of the disclosure may be implemented by hardware or software.

FIG. 4 is a view illustrating a configuration of an XR authoring tool framework server. As shown in the drawing, the XR authoring tool framework server may include a communication unit 101, a processor 102, and a storage unit 103.

The communication unit 101 may be a means for communicatively connecting with XR devices 210, 220, and the processor 102 may perform the functions of the XR authoring tool framework 100 described above, and the storage unit 103 may provide a storage space that is needed for the processor 120 to operate and perform functions.

Up to now, the XR authoring tool framework capable of supporting different types of XR devices and sensors has been described in detail with reference to preferred embodiments.

In the above embodiments, an XR authoring tool that is not subordinate to XR devices or OSs may be provided by standardizing XR device/data profiles and enabling linkage between the XR authoring tool framework and various XR devices.

As described above, in order to develop a content authoring tool that is not subordinate to XR devices, a standardized profile that specifies XR device hardware specifications, and a method of using the corresponding profile in an authoring tool may be defined, so that an authoring tool that is not subordinate to XR devices and OSs may be provided/utilized, and XT contents that are not subordinate to XR devices and OSs may be developed.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. An XR authoring tool providing method comprising:
a step of communicatively connecting, by an XR authoring tool framework, with an XR device;
a step of receiving, by the XR authoring tool framework, a device profile from the XR device; and
a step of linking, by the XR authoring tool framework, the XR device and an XR authoring tool, based on the received device profile.

2. The XR authoring tool providing method of claim 1, wherein the device profile has a code of the XR device, information on components provided in the XR device recorded thereon.

3. The XR authoring tool providing method of claim 2, wherein the components comprise a processor, a sensor, a module.

4. The XR authoring tool providing method of claim 1, wherein the step of receiving comprises further receiving a data profile from the XR device, and the step of linking comprises linking the XR device and the XR authoring tool, based on the device profile and the data profile.

5. The XR authoring tool providing method of claim 4, wherein the data profile is specified in the unit of a component.

6. The XR authoring tool providing method of claim 5, wherein the data profile has information on a component, a data name, a data format recorded thereon.

7. The XR authoring tool providing method of claim 6, wherein the step of linking comprises converting data received from the XR device, based on the device profile, and transferring the data to the XR authoring tool.

8. The XR authoring tool providing method of claim 7, wherein the data has information on the component of the XR device, the data name, a data value recorded thereon.

9. The XR authoring tool providing method of claim 1, wherein the step of connecting comprises connecting, by the XR authoring tool framework, to the XR device directly, via a platform mounted in the XR device, or via an authoring tool supported in the XR device and a platform mounted in the XR device.

10. An XR authoring tool framework comprising:
a communication unit configured to communicatively connect with an XR device;
a processor configured to receive a device profile from the XR device, and to link the XR device and an XR authoring tool, based on the received device profile; and
a storage unit configured to provide a storage space needed for the processor.

11. An XR authoring tool providing method comprising:
a step of communicatively connecting, by an XR authoring tool framework, with an XR device;
a step of receiving, by the XR authoring tool framework, a data profile from the XR device; and
a step of linking, by the XR authoring tool framework, the XR device and an XR authoring tool, based on the received data profile.

12. An XR authoring tool framework comprising:
a communication unit configured to communicatively connect with an XR device;
a processor configured to receive a data profile from the XR device, and to link the XR device and an XR authoring tool, based on the received data profile; and
a storage unit configured to provide a storage space needed for the processor.
